# EUROPÄISCHE PATENTSCHRIFT

(11) **EP 1 370 752 B1**
(45) Veröffentlichungstag und Bekanntmachung des Hinweises auf die Patenterteilung: **06.06.2007**
(21) Anmeldenummer: 02702387.8
(22) Anmeldetag: 02.03.2002
(51) Int. Cl.: F02B 43/10, F02G 5/00, H01M 8/04

(54) **SYSTEM AUS VERBRENNUNGSMOTOR UND BRENNSTOFFZELLE**
SYSTEM CONSISTING OF AN INTERNAL COMBUSTION ENGINE AND OF A FUEL CELL
SYSTEME CONSTITUE D'UN MOTEUR A COMBUSTION INTERNE ET D'UNE PILE A COMBUSTIBLE

(30) Priorität: 17.03.2001 DE 10113000
(43) Veröffentlichungstag der Anmeldung: 17.12.2003
(73) Patentinhaber: Bayerische Motoren Werke Aktiengesellschaft, 80809 München (DE)
(72) Erfinder: WETZEL, Franz-Josef, 82216 Gernlinden (DE); TACHTLER, Joachim, 85737 Ismaning (DE)
(86) Internationale Anmeldenummer: PCT/EP2002/002260
(87) Internationale Veröffentlichungsnummer: WO 2002/075131

(56) Entgegenhaltungen:
- DE-C- 19 913 795
- US-A- 6 112 713
- PATENT ABSTRACTS OF JAPAN vol. 1997, no. 04, 30. April 1997 (1997-04-30) & JP 08 339816 A (AQUEOUS RES:KK;AISIN AW CO LTD), 24. Dezember 1996 (1996-12-24)
- PATENT ABSTRACTS OF JAPAN vol. 1999, no. 10, 31. August 1999 (1999-08-31) & JP 11 132105 A (MATSUSHITA ELECTRIC IND CO LTD), 18. Mai 1999 (1999-05-18)
- PATENT ABSTRACTS OF JAPAN vol. 2000, no. 13, 5. Februar 2001 (2001-02-05) & JP 2000 303836 A (TOYOTA MOTOR CORP), 31. Oktober 2000 (2000-10-31)
- PATENT ABSTRACTS OF JAPAN vol. 1995, no. 06, 31. Juli 1995 (1995-07-31) & JP 07 065849 A (TERASAKI DENKI SANGYO KK), 10. März 1995 (1995-03-10)

## Beschreibung

Die Erfindung betrifft ein System umfassend einen Verbrennungsmotor, der insbesondere für die Fortbewegung eines Fahrzeugs dient, und eine Brennstoffzelle, die unter anderem zur Stromerzeugung für elektrische Aggregate des Fahrzeugs dient, wobei die Brennstoffzelle wärmetechnisch mit dem Verbrennungsmotor gekoppelt ist und geht aus von der DE 199 13 795 C1.

Es sind bereits Kraftfahrzeuge bekannt, bei denen einerseits ein Verbrennungsmotor und andererseits zusätzlich eine Brennstoffzelle vorgesehen sind, wobei der Verbrennungsmotor insbesondere zur Fortbewegung des Fahrzeugs dient und die Brennstoffzelle u. a. für die Stromerzeugung der elektrischen Aggregate vorgesehen ist. Bisher werden sowohl Verbrennungsmotor als auch Brennstoffzelle separat voneinander montiert. Dabei ist vornehmlich daran gedacht, dass die Brennstoffzelle wegen ihres aktuellen Platzbedarfes am Einbauort einer herkömmlichen Starterbatterie eingebaut wird. Insbesondere nach dem Abstellen eines Fahrzeugs kühlen jedoch sowohl der Verbrennungsmotor als auch die Brennstoffzelle parallel aus, so dass die in den jeweiligen Aggregaten gespeicherte Wärme an die Umgebung verloren geht. Die Brennstoffzelle befindet sich zwar meist in einer isolierenden Umhüllung, doch kann diese nur zur zeitlichen Verzögerung der gesamten Wärmeverluste führen. Bei heutigen Hochtemperatur-Brennstoffzellen liegt die Betriebstemperatur um die 850°C. Nach einem Auskühlzeitraum von 1, 2, 4 und 7 Stunden verringert sich die Temperatur der Brennstoffzelle beim aktuellen Stand der Technik auf 750°C, 650°C, 600°C bzw. 400°C. Wegen dieses Auskühleffektes können Systemoptimierungspotentiale aus der Kombination der Wärmen von Verbrennungsmotor und Brennstoffzelle nicht vollständig genutzt werden. Insbesondere kühlt der Verbrennungsmotor relativ schnell aus, so dass bei einem Wiederstart die Emissionsnachteile eines Kaltstarts in Kauf zu nehmen sind.

Nach der eingangs genannten DE 199 13 795 C1 sind eine Brennkraftmaschine und eine Brennstoffzelle für die Erzeugung elektrischer Energie für Hilfsaggregate über einen gemeinsamen Kühler und/oder über die Abgasanlage thermisch gekoppelt. Es sind jedoch diesbezüglich weitere Verbesserungen möglich, die aufzuzeigen sich die vorliegende Erfindung zur Aufgabe gestellt hat.
Zur Lösung dieser Aufgabe ist vorgeschlagen, dass die Brennstoffzelle am Motorblock des Verbrennungsmotors angeordnet oder zumindest teilweise in den Motorblock integriert ist. Vorteilhafte Weiterbildungen sind Inhalt der jeweiligen Unteransprüche.

Die grundsätzlich bekannte wärmetechnische Kopplung wird dadurch erreicht, dass die Brennstoffzelle am Motorblock des Verbrennungsmotors angeordnet oder zumindest teilweise in den Motorblock integriert ist. Durch eine primärantriebsseitige konstruktionsbedingt schwächere Wärmedämmung gegenüber der Wärmedämmung der anderen Seiten des Brennstoffzellenblockes wird ein Wärmeaustausch an dieser Stelle begünstigt. Diese Begünstigung kann durch wärmeleitverbessernde Maßnahmen zwischen einer Isolationsbox und dem Motorblock verstärkt werden.

Mit der vorgenannte Maßnahme können Wärmeaustauscheffekte zwischen der Brennstoffzelle und dem Verbrennungsmotor erfolgen, wodurch sich zum einen der Fahrzeugenergieverbrauch bei einem Wiederstarten des Fahrzeugs und die Emissionsdaten durch die Nutzung der Abwärme der Brennstoffzelle verbessern. Nicht zuletzt ist es möglich, die Brennstoffzelle auch unabhängig vom Primärmotorbetrieb beispielsweise für Standklima, Standheizungs- oder Bereitschaftsbetrieb separat zu aktivieren. In diesem Fall wird die von der Brennstoffzelle abgegebene Abwärme zur Erwärmung des Verbrennungsmotors beitragen. Insgesamt bleibt der Verbrennungsmotor daher auf einem Temperaturniveau, das beispielsweise die Notwendigkeit einer Kaltstartanreicherung und damit verbundener Kraftstoffverbrauchsnachteile entfallen lässt.

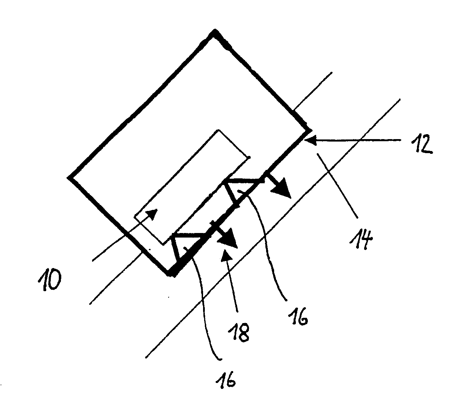

Die vorliegende Erfindung wird nachfolgend anhand einer einzigen Zeichnung näher beschrieben. Die einzige Zeichnung stellt ein schematisiertes Blockdiagramm einer Ausführungsform der vorliegenden Erfindung dar.

Bei der Ausführungsform der vorliegenden Erfindung gemäss der Zeichnung ist eine Hochtemperatur-Brennstoffzelle 10 in einen Isolierkörper 12 eingebettet und bildet eine sog. APU (Auxillery Power Unit). Diese APU ist in einer Ausnehmung des Motorblocks 14, welcher nur schematisch angedeutet ist, eingebettet. Dabei ist die Isolierung auf der Seite des Motorblocks 14 durch Herstellung einer Festkörperwärmeleitung weniger ausgeprägt als die Isolierung auf den anderen, beispielsweise dem Motorblock abgewandten Seiten, der Brennstoffzelle.

Die Hochtemperatur-Brennstoffzelle 10 und deren heiße Nebenaggregate sind über Halterungen 16 am Motorblock befestigt. Der Wärmeaustausch von der Brennstoffzelle 10 zum Motorblock 18 ist durch die Pfeile 18 dargestellt, die die Wärmeleitung bzw. Wärmestrahlung symbolisieren sollen. Die Hochtemperatur-Brennstoffzelle weist bei ihrem Betrieb eine Temperatur von etwa 800°C auf. Auf der dem Motorblock abgewandten Außenseite der Isolierung 12 herrscht eine Temperatur von etwa 45°C. Auf der Kontaktfläche zum Motorblock 14 herrscht etwa eine Temperatur von 100°C. Die Isolierung 12 ist dabei so ausgeführt, dass die technisch unvermeidlichen Wärmeverluste beim Betrieb der Brennstoffzelle während dem Stillstand des Fahrzeugs (z.B. während der Standklimatisierung oder zur sog. Boil-off-Konvertierung kryogener Kraftstoffe) im wesentlichen an den Motorblock übergehen, so dass diese Wärme dem Motor zur Verfügung gestellt wird. Wird der Motor dann betriebswarm abgestellt, hält ihn der Wärmeverlust der ebenfalls abgeschalteten APU für einige Zeit auf einer Temperatur oberhalb von 40°C. In dieser Phase entfällt die Notwendigkeit einer Anreicherung des Luft-/Brennstoff-Gemisches, die ansonsten bei einem Kaltstart erfolgen müsste. Im Fahrbetrieb sind die Wärmetransportvorgänge zwischen der APU und dem Verbrennungsmotor quasi Null, weil sich der Motorblock auf einem ähnlichen Temperaturniveau befindet, wie die am Motorblock anliegende Seite der Brennstoffzelle bzw. der Brennstoffzellen-Box.

## Patentansprüche

1. System umfassend einen Verbrennungsmotor, der insbesondere für die Fortbewegung eines Fahrzeugs dient, und eine Brennstoffzelle, die unter anderem zur Stromerzeugung für elektrische Aggregate des Fahrzeugs dient, wobei die Brennstoffzelle wärmetechnisch mit dem Verbrennungsmotor gekoppelt ist,
**dadurch gekennzeichnet, dass** die Brennstoffzelle am Motorblock des Verbrennungsmotors angeordnet oder zumindest teilweise in den Motorblock integriert ist.

2. System nach Anspruch 1
**dadurch gekennzeichnet, dass** die Brennstoffzelle an der dem Verbrennungsmotor zugewandte Seite schwächer wärmegedämmt ist als an den anderen Seiten.

3. System nach Anspruch 1 oder 2,
**dadurch gekennzeichnet, dass** im Kontaktbereich zwischen der Brennstoffzelle und dem Verbrennungsmotor Mittel zur Verbesserung des Wärmeüberganges vorgesehen sind.

4. System nach einem der Ansprüche 1 bis 3,
**dadurch gekennzeichnet, dass** eine Festkörper-Wärmeleitung über Befestigungsteile der Brennstoffzelle am Motorblock hergestellt ist.

## Claims

1. A system comprising an internal combustion engine, used especially for moving a vehicle, and a fuel cell used inter alia for generating current for electrical units in the vehicle, wherein the fuel cell is firmly coupled to the engine,
**characterised in that** the fuel cell is disposed on the engine block or at least partly incorporated therein.

2. A system according to claim 1, **characterised in that** the fuel cell is less strongly heat-insulated on the side facing the engine than on the other sides.

3. A system according to claim 1 or 2, **characterised in that** means for improving the heat transfer are provided in the contact area between the fuel cell and the engine.

4. A system according to any of claims 1 to 3, **characterised in that** solid-to-solid heat conduction is obtained via parts fastening the fuel cell to the engine block.

## Revendications

1. Système constitué d'un moteur à combustion interne, qui sert notamment assurer le déplacement d'un véhicule automobile, et d'une pile à combustible servant entre autres à fournir du courant à des équipements électriques du véhicule, cette pile étant couplée thermiquement au moteur à combustion interne,
**caractérisé en ce que**
la pile à combustible est montée sur le bloc moteur à combustion interne ou intégrée au moins en partie à ce bloc.

2. Système selon la revendication 1,
**caractérisé en ce que**
la pile à combustible est plus faiblement isolée thermiquement du côté situé vers le moteur, que de l'autre côté.

3. Système selon la revendication 1 ou 2,
**caractérisé par**
des moyens pour améliorer la transmission de chaleur dans la zone de contact entre la pile à combustible et le moteur à combustion interne

4. Système selon une des revendications 1 à 3,
**caractérisé par**
une transmission de chaleur par corps solide réalisée par l'intermédiaire de parties de fixation de la pile à combustible sur le bloc moteur.
